# EUROPEAN PATENT APPLICATION

(11) **EP 1 525 911 A1**
(43) Date of publication of application: **27.04.2005**
(21) Application number: 03024209.3
(22) Date of filing: 21.10.2003
(51) Int. Cl.: B01D 17/032

(54) **Skimmer suitable for hazardous environments**

(71) Applicant: DESMI A/S, 9400 Norresundby (DK)
(72) Inventor: Andersen, Bernhard, DK-9310 Vodskov (DE)
(74) Representative: Tellefsen, Jens J.

(57) **Abstract**

The present skimmer device is specially suitable for operating in a hazardous environment in that the entire device is conductive and, thereby, antistatic such that any static electricity which could otherwise give rise to the creation of sparks/lightning may be led away from the hazardous environment whereby the safe operation of the skimming device is guaranteed. Furthermore, by constantly monitoring the bearings of the axles, the pump and so forth by a redundancy sensor system is assured that also ignition due to the production of heat may be avoided. For this purpose, the bearings of the axles in the frame as well as in the displacement pump are made with especially large tolerances such that the rotation of these members does not cause any undue heat production due to wear or resistance in the bearings. The bearings may for example be manufactured such that the axles are layered in semi-circular round bearings which are fitted in appropriate housings in the frame member such that even variations in the axles' angle with respect to the plane of the bearing may be altered without causing undue resistance and, thereby, heat production in the bearing. As the main substance which the device is designed to remove from the liquid surface is oil and also a substantial amount of water is present, the cooling of all items in the construction of the present skimmer is safeguarded.

## Description

The present invention relates to a skimmer suitable for collecting materials such as liquids, wax or other items floating on or just below the liquid surface especially in an environment with a high explosive hazard or fire hazard.

Especially in hazardous environments, it is important to design the devices and installations which may come in use in such environments, such that the risk of creating a potential disaster is minimized. Within the scope of this invention, the environments which are contemplated are the inside of tanks for storing oil products or derivatives, waste products deriving from the processing of oil, or liquids with a rather high content of inflammable material. Furthermore, storage tanks for chemicals, fertilizers and the like where it may be desirable to clean these tanks and during the cleaning operation skim off floating residue which by the skimming process may be concentrated such that a rational and economic reprocessing can be established.

The invention is especially developed in order to be used inside tanks where ballast water from predominantly oil tankers is stored and treated after use. The ballast water will contain a rather high content of crude oil or other oil derivatives which are highly flammable and under certain conditions also very explosive.

At present, this type of ballast water is stored in a system of tanks where the water is led into a first tank. After the turbulence in the water has subsided due to the pumping action from the ship's hull to the tank, the lighter substances such as oil, derivatives and the like will collect at the surface of the waste water.

As more ballast water is pumped into the tank, the collected oil derivatives will by means of overflow installation be skimmed off the surface and transported to a further tank such that the amount of oil waste will be concentrated as the waste water flows from tank to tank. By providing more tanks, a reasonably good concentration of oil waste may be produced which can, thereafter, be destroyed or reused.

The concentrated oil residue is collected for reuse by specially designed ships. Usually, however, the price of the concentrated waste product depends on the amount of water in the oil residue. If the water content is too high, the collector usually gets the oil residue for free. Furthermore, the process of further separation of the water from the waste oil product is rather cumbersome and costly in that the water/oil separators are expensive installations which are also expensive to run.

Consequently, it is desirable to device a new manner for collecting the oil residue from the waste water such that the water content in the residue may be minimised whereby the value of the oil residue may be increased, and at the same time, the installation cost of the tanks necessary for the traditional treatment of waste water may likewise be saved.

This problem is addressed by the present invention by providing a skimmer wherein a frame is provided, and on said frame, adjustable buoyancy means are provided, and that an endless belt arranged around two rotatable axles is provided such that a lower end of said belt will be in contact with the surface of the liquid, and that the belt is made from a conductive material, that engagement means for rotating the belt as well as the rotating axles are made from a conductive material, and that bearings for the axles are made from a conductive material, and that means for connecting the bearings and/or the axles and/or the belt with an earth conductor outside the hazardous environment is provided.

In order to avoid the production of sparks and thereby, the risk of igniting the residue oil or fumes/gasses deriving from the ballast waste water, it has hitherto not been desirable to place any kind of mechanical operating devices inside the tanks of the type described above. Mechanical devices with moving parts have the inherent risk that sparks may be produced if two components of the device touch. Furthermore, if there is any kind of rotation involved, the static field and, thereby, the difference in potential between different parts of the device may also give rise to sparks. Consequently, the present skimmer has been devised such that all parts are electrically connected by conducting members, and all members are made from conductive materials such that an efficient anti-static situation may be guaranteed during operation. This is assured by electrically connecting the skimmer inside the tank to an earth conductor outside the hazardous environment, in this case where the hazardous environment is inside a tank, such that the skimmer is effectively grounded.

For tanks of the type mentioned above, the voltage level at which static electricity is considered safe, is set to up to 1000 volts. Tests with the present invention in a hazardous environment corresponding to the environment inside a tank for storing ballast waste water have shown that a skimmer constructed according to the principles of the present invention generates only 5 volts which is well within the safety margin as described for tanks of this type.

In a further advantageous embodiment, the endless belt is assembled from a number of substantially identical chain links connected in a hinge-like manner by a pin member, and that on at least a number of the chain links, bristles and/or brushes are provided. By providing bristles and/or brushes, the endless belt is able to transport more material from the surface such that a more efficient skimmer is provided. Also by arranging the bristles and/or brushes in the chain links, the bristles and/or brushes can be arranged substantially perpendicular to the surface of the belt whereby liquid or substantially liquid substance can be transported away from the surface. On the surface of the liquids stored in the tanks of the type described above, the oil residue material will have a tendency to take on a wax quality where said wax will have thixotropic properties. Therefore, by providing bristles and/or brushes on the endless belt, even the particles which due to the agitation by the endless belt will turn to substantial liquid may be transported by means of an endless belt provided with bristles and/or brushes.

In a further advantageous embodiment, at least some of the bristles and/or brushes are made from a conductive material, such as nylon or styrene comprising an antistatic additive such as for example Wytex ® , and that the chain links are made from an anti-static material, such as for example a modified thermoplastic polymer and especially preferred a POM comprising a stainless steel granulate.

As the mechanical movement of the axles as well as the endless belts at the interaction with the surface of the liquid may create static electricity, it is important that the elements of the device are grounded such that any static electricity arising from the skimmer or the skimmer's action with the material kept in the hazardous environment is led off for example through an earth conductor arranged outside the hazardous environment. Therefore, by using conductive materials such as nylon bristles containing an additive such that the single hairs or fibres of the brushes are conductive, and, furthermore, that the chain links are made from a conductive material and also that the engagement means on the axles for engaging the chain links is antistatic as well as the axles and bearings of the device are conductive, it is possible to conduct the static electricity which may arise from the skimmer's action away from the hazardous environment and to an earth conductor.

The Wytex® -material which is an additive to the thermoplastic elastomer such as for example nylon, imparts a permanent and antistatic property to this material. Furthermore, the Wytex® -material is a so-called static dissapative which will not flake, chip or wash-off, and has no influence on the mechanical properties of the nylon. Furthermore, it is thermally stable such that when added to the nylon, it does not influence the nylon in any detrimental way. Furthermore, the nylon may be injection moulded or worked in any traditional way without loosing the properties imparted by the Wyte® - materials. In practice, tests with nylon fibres comprising a static dissapative as for example Wytex® have shown that for charges between 5000 volts to minus 5000 volts, the relative humidity or the static decay have no influence on the properties of the static dissapative, but the surface resistivity remains substantially stable, for example for the Wytex®-composition around 5-6 * 10¹¹.

In a further advantageous embodiment, some of the bristles and/or brushes provided on the endless belt do not have antistatic properties and further that some of the bristles and/or brushes has a varying stiffness. It may be advantageous to be able to provide bristles/brushes having different characteristics than the antistatic bristles/brushes in order to be able to collect material from the surface, which due to the stiffness and/or surface structure of the antistatic bristles, cannot be collected from the liquid surface by means of these brushes. A special configuration of antistatic and non-antistatic brushes may be desirable such that a conductive zone substantially extending completely over the endless belt is achieved whereby any static electricity arising from the action of the belt can safely and securely be grounded.

In a still further advantageous embodiment, the frame is further provided with means for rotating the axles, and that adjacent an upper end of the endless belt a scraper is provided for scraping the collected material off the belt, and into a first collection tank, which tank may be connected by means such as a hose or pipe to a second collection tank outside the hazardous environment, and that optionally a pump means may be provided for transferring the collected material from said first collection tank to said second collection tank. Once the material has been collected from the surface, it is transported by means of the endless belt to a collection tank. In order to clean the belt efficiently, a scraper is provided such that the collected material is efficiently removed from the endless belt such that when the belt engages the surface to be cleaned, it is substantially empty and, therefore, able to remove the projected amounts of material from the surface.

Due to the nature of some of the materials collected from the surface, it may not be possible in some instances that this material will readily flow due to the influence of gravity out of the collection tank and into a second collection tank for example arranged outside the hazardous environment where the collected material can be further processed or disposed of in a safe manner. Therefore, a pump may be provided such that in instances where the material does not readily flow, the pump can force the collected material through the hose or pipe into the second collection tank. For this purpose, it has been found that especially displacement pumps are especially useful.

In order to further reduce the risk of generating sparks or spark producing situations, the skimmer is in a further advantageous embodiment equipped such that means for rotating the axles and driving the optional pump means is one or more hydraulic or pneumatic motors.

Although the skimmer according to the invention is manufactured such that conductive materials are used whereby it will be possible to lead off any static electricity deriving from the action of the skimmer, the skimmer is in a further advantageous embodiment provided with sensor means for continuous monitoring of temperatures and/or rotation and/or load on belt and/or material flow in the first collection tank is provided, where the temperature is registered by means of thermocouples in or adjacent the bearings of the axles and/or in or adjacent the means for rotating the axles, that the load on the belt is monitored for example by registering the oil or air pressure in the hydraulic or pneumatic motor means. In addition to static electricity which may generate sparks due to different electrical potentials between the surface and the device, ignition of vapours, gasses or liquids in hazardous environments may also derive from the generation of heat for example in the skimmer. For this purpose, all moving parts which could possibly generate heat are equipped with thermocouples whereby it is possible to continuously monitor the temperature in the bearings, hydraulic or pneumatic motors etc. The thermocouples are arranged in pairs such that a redundancy system is established, i.e. two thermocouples arranged around the same axle should with intolerances give the same temperature reading. If one falls out, the other will still be able to indicate the temperature, but also the fall out will indicate that maintenance of the device is required. Further by monitoring the load on the belt which in turn will put extra or exaggerated loads on the motor means, the unwanted generation of heat in the motor means may be avoided.

In a further advantageous embodiment, the skimmer is equipped with a baffle, which baffle is fastened to the frame, such that said baffle extends in a substantially horizontal plane when the skimmer is in use, a distance in front of and lower than the lower end of said endless belt. The baffle serves to lead and guide the material to be collected from the surface towards the lower end of the endless belt, and at the same time, limiting the amount of material which is brought to the belt. A second very important aspect is that material flowing back from the belt does not create turbulence immediately adjacent the collection zone of the endless belt. Due to the thixotropic properties of the materials, it is desirable to maintain the surface of the liquid as undisturbed as possible. This is important in that the belt has a maximum capacity corresponding to the length, the stiffness parameters of the bristles/brushes arranged on the belt, the width of the belt and the rotation speed with which the belt travels. It is, therefore, desirable to provide a substantially constant load whereby a constant amount of material is collected from the surface and processed through the belt, the scraper, the collection tank etc.

The baffle may be provided with adjustment means such that the angle or depth of the baffle in relation to the surface of the liquid from which the material is to be collected may be remotely controlled. This is desirable where different materials or different stages of the materials for example before the oil residue products have turned into wax products are present such that it may be desirable to allow more material to the lower end of the endless belt whereas when it has turned to a thick wax layer, less material should be led to the endless belt.

In order to avoid the generation of vapour mists or other mists in connection with the rotation of the endless belt on the skimmer, the skimmer is in a further advantageous embodiment provided with an upper and lower shield where the upper shield is arranged at a distance above the endless belt, and the lower shield is arranged at a distance below the endless belt, and further that said shields substantially cover the endless belt. Due to the stiffness of the single bristles/brushes on the endless belt and the non-homogenous consistency of the material collected from the surface, a mist of collected material may arise around the device. As the single particles in the mist may have different electric potentials, it may give rises to the generation of sparks. By providing the shields either on both sides or on one side only, the formation of this type of mist may be avoided in that the particles which are thrown free from the collected mass will impact on the shield and slowly slide downwards towards the liquid surface again or drip off onto the belt.

In order to provide the necessary power for the skimmer, the skimmer is in a further advantageous embodiment provided with a power pack placed outside the hazardous environment and that said power pack is communicating with the skimmer by means of pipes for supplying oil and/or air pressure, and wiring for input from the sensor means. The energy produced by the power pack may be transferred to the skimmer by means of wires, pipes and hoses such that both the oil pressure for driving the hydraulic motor means as well as the input or signals deriving from the sensors arranged around the skimmer, can be transmitted through the same cluster of pipes/wires.

In a still further advantageous embodiment, the skimmer is arranged inside a wastewater tank, and in particular a ballast waste water tank, and that optionally means are provided for pulling and guiding the skimmer around inside the tank. It is especially advantageous to use the present invention in connection with collection of oil residue deriving from the ballast water from oil tankers. It should, however, be pointed out that due to the inventive construction of the skimmer according to the invention, it may advantageously be used for other purposes as well.

By further providing means such that the skimmer may be moved around inside the tank, the productivity of the skimmer may be enhanced. When the tank has a substantial amount of waste material floating on a surface, the action of the skimmer will create a certain flow whereby material will be pulled towards the endless belt. When however, the amount of material or the consistency of the material floating on the surface of the liquid changes, it might be desirable to move the skimmer around in order to collect the waste material which may otherwise not by means of the general flow in the tank come within the vicinity of the endless belt.

In a further advantageous embodiment for providing the movement inside the tank, the tank comprises a roof mounted rail connected by a wire to the frame of the skimmer, or that the means for connecting the first collection tank to the second collection tank may be swivelled such that the skimmer circles on the surface of the liquid.

One particular embodiment of the invention will now be explained with reference to the accompanying drawing, wherein
- fig. 1: illustrates a side view of the skimmer,
- fig. 2: illustrates a front view of the skimmer,
- fig. 3: illustrates a top view of the skimmer,
- fig. 4: illustrates two skimmers coupled together,
- fig. 5: illustrates a detail of a belt, and
- fig. 6: illustrates a detail of a belt construction.

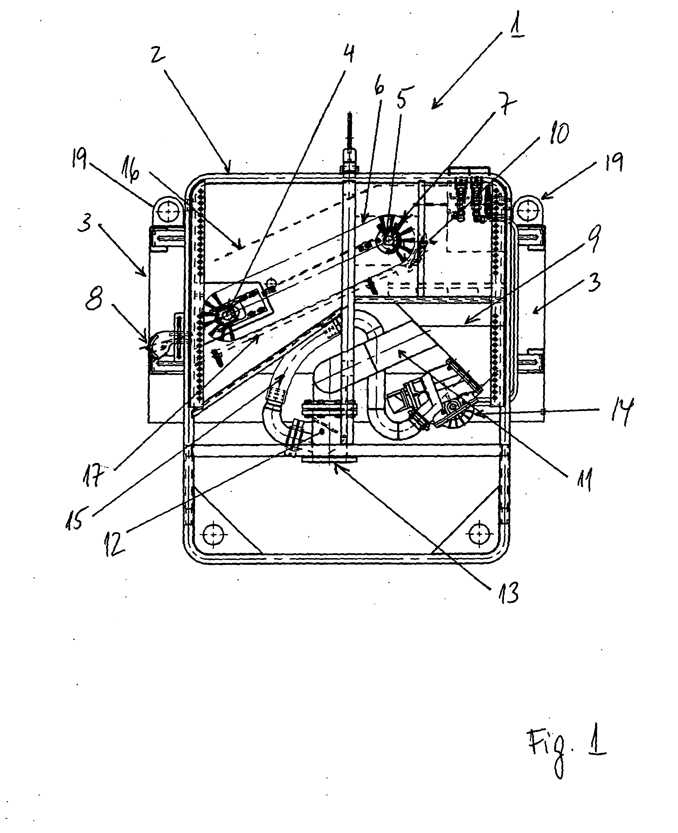

A preferred embodiment of the skimmer 1 is illustrated in fig. 1. The skimmer as seen in a sideways view is constructed around a frame 2 preferably made from stainless steel such that it will be able to withstand the corrosive effects of a hazardous environment.

The frame 2 as is seen in fig. 2 comprises two sub-frames 2',2" between which the skimmer mechanism is arranged. Outside the frame 2',2", flotation means 3 in the shape of pontoons are provided. Between the two frames 2',2" two axles 4,5 are arranged around which an endless belt 6 may rotate. The endless belt 6 is provided with brushes 7 of which only a limited number is illustrated, but the endless belt 6 is substantially covered with brushes 7 over its entire surface. At the lower end of the endless belt 6 adjacent the axle 4, a baffle 8 is arranged. The baffle serves two main purposes. For some materials, which are desirable to collect from the surface with the present skimmer, the characteristics are such that the wax texture is relatively stiff, and the characteristics of the material change when the material is agitated, i.e. the material has thixotropic characteristics. In order not to agitate the material for example by the return flow of liquid or material which is sliding off the endless belt 6 during the skimming process, the baffle 8 assures that there will be no turbulence immediately adjacent the zone where the endless belt 6 engages the liquid surface for collecting material from said surface. In this embodiment, the baffle 8 is adjustable in a direction perpendicular to the liquid surface such that in relation to the thixotropic character of the material, the layer by which the endless belt will engage the liquid surface may be adjusted.

The endless belt 6 may rotate in any direction such that collected material may be brought towards the upper axle 5 either on top of the endless belt 6 or on the bottom. In order to make sure that as much as possible of the material collected by the endless belt 6 is delivered in the collection tank 9, a scraper 10 is provided which scraper 10 will engage the endless belt in order to scrape off any materials collected by the endless belt 6. The material is delivered to the first collection tank 9 where after the material may be led through the outlet pipe 11 from the collection tank 9 through a one-way valve 12. The valve 12 comprises joint means 13 for connecting the skimmer to a pipe or hose such that the collected material may be transferred to a second collection tank outside the hazardous environment. Some of the materials collected may have a consistency such that they will not readily flow through the outlet pipe 11 and the valve 12. In order to assure that it is possible to empty the collection tank 9 and, thereby, maintain the skimmer in an operative mode, a displacement pump 14 is provided. The displacement pump may be activated in order to force the material collected out through the secondary outlet pipe 15 in order to empty the collection tank 9.

Returning to the arrangement of the endless belt 6 as illustrated in phantom lines, two shields 16,17 are provided. The upper shield 16 serves to avoid that a mist of ignitable material will be created around the skimmer. As the materials have a different consistency, and at the same time, the brushes 7 on the endless belt 6 are flexible, the single fibres making up the brushes might flick small particles of the material into the air due to the motion of the endless belt. By providing the upper shield 16, these particles will impact on the shield and either fall back on the endless belt or slide down along the shield 16 and drip onto the liquid surface or the endless belt again.

The lower shield 17 serves to maintain material collected from the surface when the endless belt is rotated such that the material is lifted by the lower section of the belt whereby the material will be pushed by the brushes 7 along the lower shield 17.

In fig. 2, an end view of the skimmer according to the invention is illustrated. The same features are denoted by the same reference numbers. As may be seen from fig. 2, there are provided two outlets 11 from the collection tank arranged in the skimmer. Furthermore, in order to be able to lift the skimmer out of the liquid or to guide the skimmer around the liquid surface, a beam including a lifting eye 18 is provided. Also due to the weight of the pontoons 3, these may be provided with lifting eyes 19.

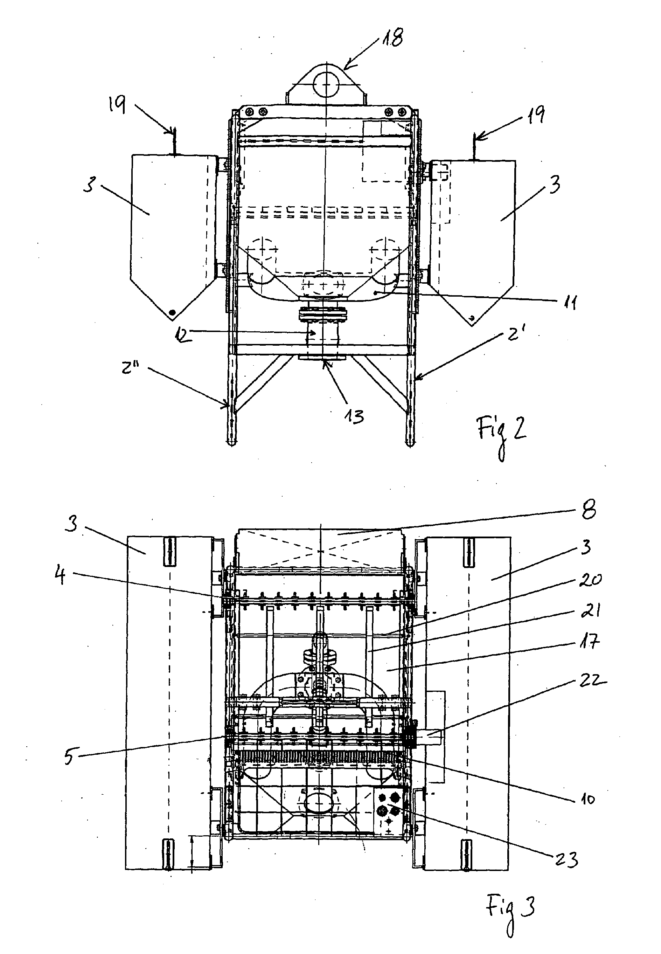

Turning to fig. 3, the skimmer is seen from above. Furthermore, for clarity reasons, the endless belt as well as the upper shield 16 have been removed. Therefore, it is possible to see the two axles 4,5 as well as a support structure 20,21 provided in order to support the flexible endless belt between the two axles 4,5. The axle 5 is brought to rotate by the motor means 22, which preferably is a hydraulically driven motor. The input as well as the output to and from the device is delivered through the connection box 23. The output consists mainly of return hydraulic oil and readings from the thermocouples provided in connection with or in the bearings. The output may also comprise information about the flow through the outlet valve 12 as well as the temperature in the pump 14.

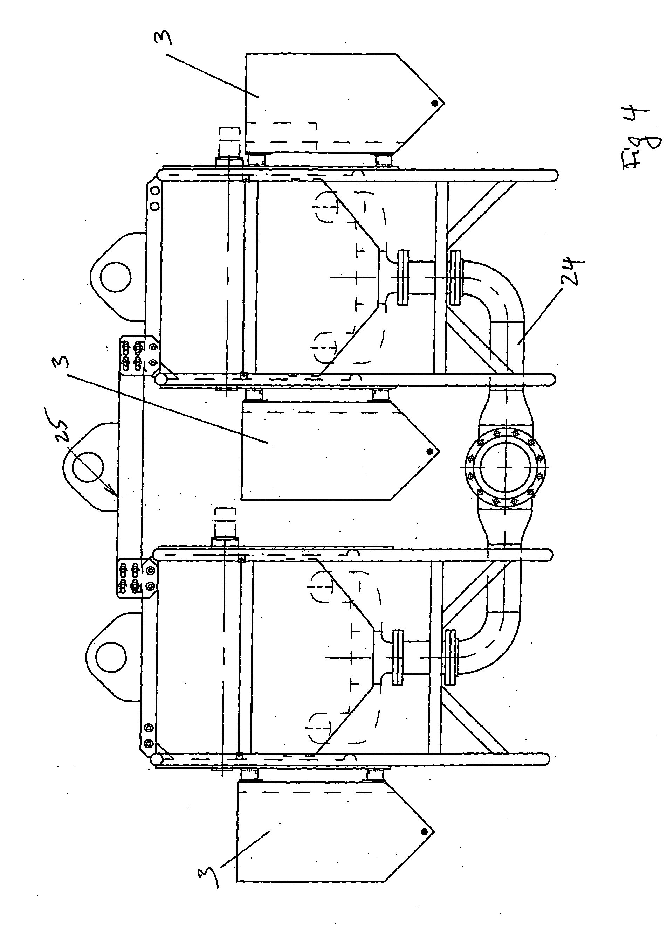

Turning to fig. 4, a system where two skimmers according to the invention are coupled together in order to double the productivity of the skimming process is illustrated. The two skimmers are substantially identical and are connected via the main outlet pipe 24 and the connection beam 25. One of the flotation means has been dismounted such that the double skimmer device comprises three flotation means. Apart from that, the skimmer devices are as described above.

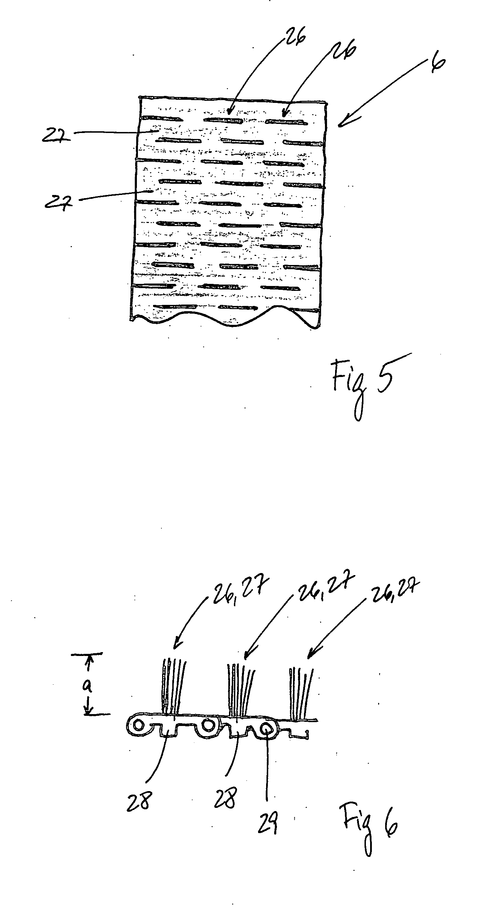

In fig. 5, an example of an endless belt according to the invention is illustrated. On the belt 6 is arranged a number of brushes where the brushes have different stiffness characteristics. The brushes 26 are relatively stiffer than the brushes 27. By arranging the brushes in a pattern as illustrated in fig. 5, it is assured that the conductive brushes 27 are more or less connected such that it is possible to conduct any static electricity which may arise due to the motion/friction of the endless belt 6 in relation to the liquid surface from which it is desirable to remove material. By, however, providing stiffer brushes 26, it is possible to remove heavier items from the liquid surface than would otherwise be possible with the relatively softer brushes 27. It should however be bourn in mind that the brushes 26,27 may be installed with any stiffness, and furthermore, that the length of the brushes may be varied such that also the relative stiffness of each bristle making up the brushes will be changed. For the purpose of removing the wax substances from ballast water in waste water tanks as discussed above, it has been found that depending on the materials chosen for making the brushes, the brushes should have a length a as illustrated in fig. 6 between 40 and 80 millimetres.

Turning to fig. 6, a detail of the endless belt is illustrated. The endless belt is made from a number of substantially identical chain links 28 which, preferably, are made from a conductive POM material for example by an injection moulding process. The POM has a filler of granular stainless steel in order to provide conductivity to the chain links 28. The chain links are connected to adjacent chain links by pin members 29. The pins may also optionally, but not necessarily, be made from a conductive material. At the top surface of the belt, the brushes are substantially perpendicularly arranged relative to the surface.

Although the present invention has mainly been discussed with relation to removing wax substances deriving from the oil left in the ballast water from tankers, the invention may be used for many other purposes where similar problems arise.

The present skimmer device is specially suitable for operating in a hazardous environment in that the entire device is conductive and, thereby, antistatic such that any static electricity which could otherwise give rise to the creation of sparks/lightning may be led away from the hazardous environment whereby the safe operation of the skimming device is guaranteed. Furthermore, by constantly monitoring the bearings of the axles, the pump and so forth by a redundancy sensor system is assured that also ignition due to the production of heat may be avoided. For this purpose, the bearings of the axles in the frame as well as in the displacement pump are made with especially large tolerances such that the rotation of these members does not cause any undue heat production due to wear or resistance in the bearings. The bearings may for example be manufactured such that the axles are layered in semi-circular round bearings which are fitted in appropriate housings in the frame member such that even variations in the axles' angle with respect to the plane of the bearing may be altered without causing undue resistance and, thereby, heat production in the bearing. As the main substance which the device is designed to remove from the liquid surface is oil and also a substantial amount of water is present, the cooling of all items in the construction of the present skimmer is safeguarded.

## Claims

1. Skimmer suitable for collecting materials such as liquids, wax or other items floating on or just below a liquid surface, especially in an environment with a high explosive hazard or fire hazard wherein a frame is provided, and on said frame adjustable buoyancy means are provided, and that an endless belt arranged around two rotatable axles is provided such that a lower end of said belt will be in contact with the surface of the liquid, and that the belt is made from a conductive material, that engagement means for rotating the belt as well as the rotating axles are made from a conductive material, and that bearings for the axles are made from a conductive material, and that means for connecting the bearings and/or the axles and/or the belt with an earth conductor outside the hazardous environment is provided.

2. Skimmer according to claim 1, wherein the endless belt is assembled from a number of substantially identical chain links connected in a hinge-like manner by a pin member, and that on at least a number of the chain links bristles and/or brushes are provided.

3. Skimmer according to claim 1 or 2, wherein at least some of the bristles and/or brushes are made from a conductive material, such as nylon or styrene comprising an antistatic additive such as for example Wytex ® , and that the chain links are made from an antistatic material, such as for example a modified thermoplastic polymer and especially preferred a POM comprising a stainless steel granulate.

4. Skimmer according to any of claims 2 and 3, wherein some of the bristles and/or brushes provided on the endless belt does not have antistatic properties and further that some of the bristles and/or brushes has a varying stiffness.

5. Skimmer according to any preceding claim, wherein on the frame is further provided means for rotating the axles, and that adjacent an upper end of the endless belt a scraper is provided for scraping the collected material off the belt, and into a first collection tank, which tank may be connected by means such as a hose or pipe to a second collection tank outside the hazardous environment, and that optionally a pump means may be provided for transferring the collected material from said first collection tank to said second collection tank.

6. Skimmer according to claim 5, wherein the means for rotating the axles and driving the optional pump means is one or more hydraulic or pneumatic motors.

7. Skimmer according to claim 5 or 6, wherein sensor means for continuous monitoring of temperatures and/or rotation and/or load on belt and/or material flow in the first collection tank is provided, where the temperature is registered by means of thermocouples in or adjacent the bearings of the axles and/or in or adjacent the means for rotating the axles, that the load on the belt is monitored for example by registering the oil or air pressure in the hydraulic or pneumatic motor means.

8. Skimmer according to any preceding claim, wherein a baffle is fastened to the frame, such that said baffle extends in a substantially horizontal plane when the skimmer is in use, a distance in front of and lower than the lower end of said endless belt.

9. Skimmer according to any preceding claim, wherein an upper and/or lower shield is provided, where the upper shield is arranged at a distance above the endless belt, and the lower shield is arranged at a distance below the endless belt, and further that said shields substantially covers the endless belt.

10. Skimmer according to any preceding claim, wherein a power pack placed outside the hazardous environment is provided and that said power pack is communicating with the skimmer by means of pipes for supplying oil and/or air pressure, and wiring for input from the sensor means.

11. Skimmer according to any preceding claim, wherein the skimmer is arranged inside a wastewater tank, and in particular a ballast waste water tank, and that optionally means are provided for pulling and guiding the skimmer around inside the tank.

12. Skimmer according to claim 11, wherein the means for pulling and guiding the skimmer inside the tank comprises a roof mounted rail connected by a wire to the frame of the skimmer, or that the means for connecting the first collection tank to the second collection tank may be swivelled such that the skimmer circles on the surface of the liquid.
